# EUROPÄISCHE PATENTSCHRIFT

(11) **EP 1 802 891 B1**
(45) Veröffentlichungstag und Bekanntmachung des Hinweises auf die Patenterteilung: **16.02.2011**
(21) Anmeldenummer: 05795052.9
(22) Anmeldetag: 27.09.2005
(51) Int. Cl.: F16F 9/05

(54) **LUFTFEDER**
AIR SPRING
RESSORT PNEUMATIQUE

(30) Priorität: 15.10.2004 DE 102004050189
(43) Veröffentlichungstag der Anmeldung: 04.07.2007
(73) Patentinhaber: ContiTech Luftfedersysteme GmbH, 30165 Hannover (DE)
(72) Erfinder: SZYSZKA, Axel, 30519 Hannover (DE); HLAWATCZEK, Matthias, 659 Hannover (DE)
(74) Vertreter: Finger, Karsten
(86) Internationale Anmeldenummer: PCT/EP2005/010393
(87) Internationale Veröffentlichungsnummer: WO 2006/042618

(56) Entgegenhaltungen:
- DE-B- 1 175 038
- FR-A- 2 717 237
- GB-A- 873 348
- US-A- 5 382 006

## Beschreibung

Die Erfindung betrifft eine Luftfeder - mit einem Abrollkoben mit einem Kolbendeckel, einer Abrollkante, einem Abrollmantel und einem Konussitz im Kolbendeckel, mit einem Luftfederbalg mit einer Balgwand aus elastomerem Werkstoff mit mindestens einer Verstärkungslage und einem an einer unteren, dem Abrollkolben zugewandten Öffnung angeordneten Wulst, der einen ringförmigen Verstärkungskern ausweist, wobei die mindestens eine Verstärkungslage im Bereich des unteren Endes des Luftfederbalges um den Verstärkungskern herumgeführt ist, wobei der Balg der Luftfeder eine Balgwand aufweist, die an einer im auf dem Kolben montierten Zustand des Balges oberen, vom Deckel des Abrollkolbens abgewandten Seite des Wulstes vom Kolbendeckel wegweisend vom Wulst abragt und bei vollständiger Ausfederung der Luftfeder eine Tangente der Balgwand an der Stelle, an der die Balgwand vom Wulst abragt, mit dem Deckel des Abrollkolben einen Winkel im Bereich von 45°-90° bildet.

Die DE 197 17 892 A1 beschreibt eine Luftfeder der eingangs geschilderten Art, bei der der Wulst dichtend an dem Konussitz des Abrollkobens anliegt. Der Übergang vom Wulst in die Wand des Luftfederbalges ist so gestaltet, dass der Luftfederbalg im nahezu rechten Winkel zur Kolbenachse vom Wulst abragt und dabei an der dem Kolbendeckel zugewandten Seite des Wulstes abgeht und auf dem Kolbendeckel aufliegt. In dem Wulst ist ein ringförmiger Verstärkungskern, beispielsweise aus Stahldraht eingearbeitet.

Die Balgwand des Luftfederbalges weist üblicherweise eine oder mehrere Lagen eines Verstärkungsgewebes auf, die die im Betrieb auftretenden Belastungen aufnehmen. Um die Kräfte in den Abrollkoben einleiten zu können, müssen die Verstärkungslagen um diesen Verstärkungskern herumgeschlungen werden. Die Verstärkungslagen bilden also eine Schlaufe oder Schlinge, deren Ende zur Erreichung der notwendigen Tragfähigkeit um eine vorbestimmte Länge wieder in der Balgwand zurückgeführt werden muss. Diese Länge ist wegen der Erhaltung der notwendigen Zugfestigkeit der Verstärkungslagen nicht beliebig verkürzbar. Im Bereich der Schlaufe ist die Balgwand aufgrund der verdoppelten Verstärkungslagen besonders steif.

Die Folge der Anordnung gemäß dem oben geschilderten Stand der Technik auch die Dokumente DE-B-1175038 und FR-A-2717237 ist, dass der steife Bereich der Balgwand meistens über die Abrollkante, das ist der Übergangsbereich von Kolbendeckel in den Abrollmantel, hinaus reicht und dadurch das Wiederabrollen des Luftfederbalges nach vollständiger Ausfederung der gesamten Luftfeder erschwert oder, insbesondere im drucklosen Zustand, auch verhindern kann. Dabei kommt es zu Faltenbildung im Luftfederbalg, was zum Einklemmen und zu vorzeitiger Zerstörung der Balgwand fuhren kann.

Der Erfindung liegt die Aufgabe zugrunde, eine Luftfeder der eingangs geschilderten Art zu schaffen, die auch nach vollständiger Ausfederung und auch im drucklosen Zustand leicht wieder auf dem Abrollkoben abrollt. Der Erfindung liegt ferner die Aufgabe zugrunde, einen Luftfederbalg zu schaffen, der für eine derartige Luftfeder geeignet ist.

Diese Aufgabe wird dadurch gelöst, dass die in die Balgwand zurückgeführte Schlaufe der mindestens einen Verstärkungslage in eingefedertem Zustand des Balges innerhalb des Kolbendurchmessers vor der Abrollkante endet.

Die Aufgabe wird ebenfalls durch den nebengeordnete Anspruch 3 gelöst.

Diese Erfindung hat den Vorteil, dass die Balgwand bei auf dem Abrollkoben abrollenden Luftfederbalg nicht am Kolbendeckel anliegt, sondern einen vom Deckel weg weisenden Bogen bildet. Dieser Bogen nimmt eine größere Länge der Balgwand auf als ein auf dem Deckel eben anliegendes Balgwandstück aufweist. Daher reicht die zurückgeführte Schlaufe der Verstärkungslage nicht in die Abrollkante hinein. Der steife Teil der Balgwand liegt also noch innerhalb des Kolbendurchmessers, so dass sich der Luftfederbalg leicht über die Abrollkante abrollen lässt.

Mit dieser erfindungsgemäßen Anordnung wird das Abrollverhalten des Luftfederbalges sowohl im druckbeaufschlagten, als auch im drucklosen Zustand verbessert. Damit wird ein leichteres und sichereres Einfedern der Luftfeder in allen Betriebszuständen erzielt. Das Risiko der Beschädigung des Luftfederbalges durch Einklemmung und Faltenbildung ist reduziert.

Gemäß einer Weiterbildung der Erfindung weist der Balg der Luftfeder im Bereich des Endes der Schlaufe eine Sollknickstelle derart auf, dass der vom unteren Ende des Luftfederbalges aus im unmontierten, senkrecht ausgerichteten Zustand nach oben gesehen wachsende Durchmesser des Luftfederbalges ab dieser Stelle auf einer vorbestimmte Länge des Luftfederbalges stärker zunimmt als zwischen dem unteren Ende des Luftfederbalges und der Knickstelle, wobei die Knickstelle im Betrieb szustand der Luftfeder im Bereich der Abrollkante des Abrollkolbens zu liegen kommt.

Der Vorteil dieser Anordnung liegt darin, dass durch die Knickstelle der Luftfederbalg im Bereich der Abrollkante in Abrollrichtung vorgeformt ist und damit das Abrollen zusätzlich erleichtert ist.

Anhand der Zeichnung wird nachstehend ein Ausführungsbeispiel der Erfindung näher erläutert. Es zeigt
- Fig. 1: einen unteren Abschnitt eines Luftfederbalges vor der Montage,
- Fig. 2: den Abschnitt des Luftfederbalges in montiertem, ausgefederten Zustand,
- Fig. 3: eine erfindungsgemäße Luftfeder mit auf dem Abrollkoben abgerollten Luftfederbalg und
- Fig. 4: einen Teilquerschnitt des Wulstbereiches des erfindungsgemäßen Luftfederbalges

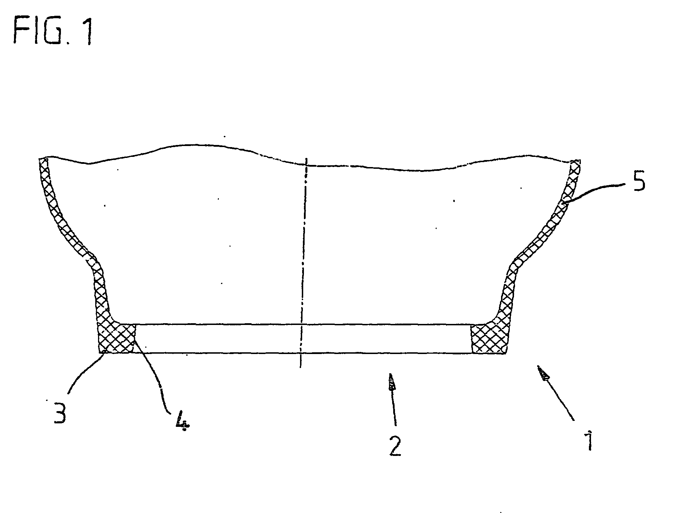

Fig. 1 zeigt einen unteren Abschnitt eines unmontierten erfindungsgemäßen Luftfederbalges 1. Er weist eine untere Öffnung 2 auf, welche durch einen um die Öffnung 2 herum angeordneten, ringförmigen Wulst 3 umfasst ist. Der Wulst 3 weist an seiner Innenseite eine konische Dichtfläche 4 auf. Eine Balgwand 5 ragt vom Wulst 3 ab.

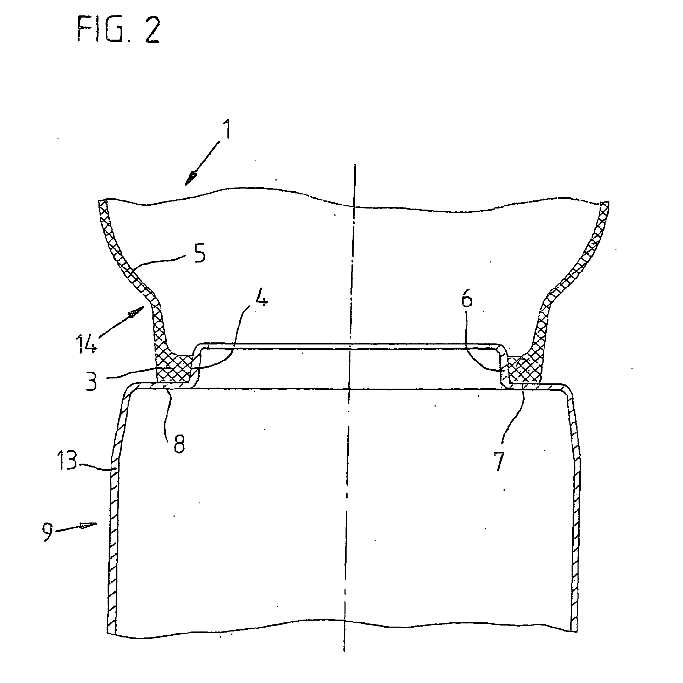

In Fig. 2 ist der Abschnitt des Luftfederbalges 1 im montierten, vollständig ausgefederten Zustand gezeigt. Der Wulst 3 liegt mit seiner konischen Dichtfläche 4 an einem Konussitz 6 und mit seiner Unterseite 7 an einem Kolbendeckel 8 eines Abrollkolbens 9 an. Vom Abrollkolben 9 ist nur ein oberer Abschnitt gezeigt. Der Konussitz 6 ist zentrisch in einem Kolbendeckel 8 angeordnet. Der Kolbendeckel 8 geht über eine Abrollkante 12 in einen Abrollmantel 13 über. Der Abrollkolben ist durch eine nicht gezeigte Befestigungsvorrichtung an einem Fahrzeug befestigt.

Die Balgwand 5 ragt vom Wulst 3 an der oberen, vom Kolbendeckel 8 abgewandten, nach Außen weisenden Seite derart ab, dass sie mit dem Kolbendeckel 8 einen Winkel zwischen 85° und 90° bildet. Mit zunehmender Entfernung vom Wulst 3 nimmt der Durchmesser des Luftfederbalges 1 stetig zu. Die Balgwand 5 weist vom Wulst 3 beabstandet eine Sollknickstelle 14 auf. Die Durchmesserzunahme des Luftfederbalges 1 nimmt ab dieser Sollknickstelle 14 für eine vorbestimmte Länge zu, so dass sich die Balgwand 5 vom Wulst 3 aus gesehen ab der Sollknickstelle 14 stärker nach außen wölbt als vor der Sollknickstelle 14.

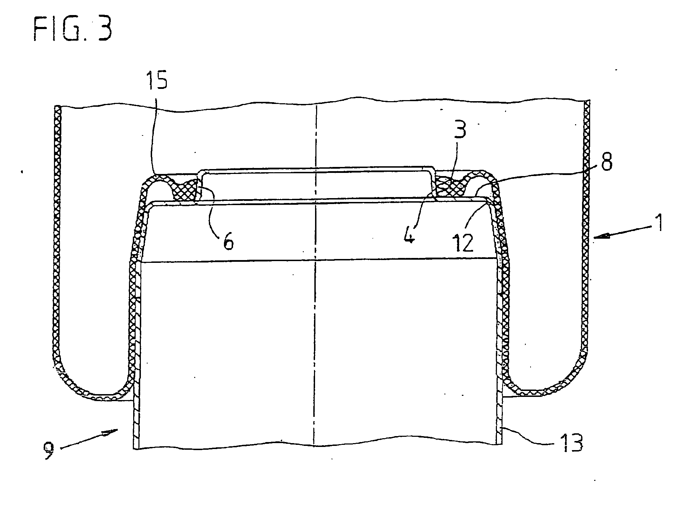

Die Fig. 3 zeigt den unteren Abschnitt des Luftfederbalges 1 in montiertem und abgerollten Zustand auf einem Abrollkolben 9, von dem nur der obere Teil gezeigt ist. Der Wulst 3 des Luftfederbalges 1 ist mit seiner konischen Innenfläche 4 auf den Konussitz 6 aufgepresst und schließt den Luftfederbalg 1 gegen den Abrollkolben 9 luftdicht ab.

Die vom Wulst 3 unter einem Winkel von 85°- 90° nach oben abragende Balgwand 5 ist durch die Abrollung des Luftfederbalges 1 zu einem Bogen 15 geformt, der im Wesentlichen nicht auf dem Kolbendeckel 8 aufliegt. Das Stück der Balgwand 5 im Bogen 15 weist zwischen Wulst 3 und der Abrollkante 12 des Abrollkolbens 9 eine größere Länge auf als ein eben auf dem Kolbendeckel 8 anliegendes, horizontal vom Wulst 3 abragendes Stück der Balgwand 5 aufweisen würde.

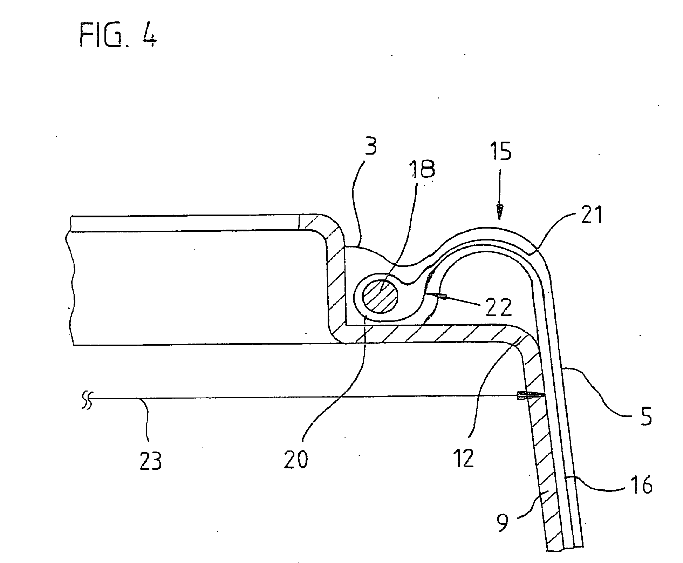

Die Fig. 4 zeigt einen Teilquerschnitt des Wulstbereiches des Luftfederbalges 1 in montiertem Zustand. Im Inneren des Wulstes 3 ist ein ringförmiger Verstärkungskern 18 aus Stahldraht angeordnet. Die Balgwand 5 weist eine Lage 19 eines Festigkeitsträgergewebes auf, die im Wulst 3 um den Verstärkungskern 18 herumgeschlungen ist und dadurch eine Schlaufe 20 bildet. Das Ende 21 der Schlaufe 20 ist in die Balgwand 5 zurückgeführt und endet, bevor die Balgwand 5 die Abrollkante 12 des Abrollkobens erreicht.

Im Bogen 15 ist die Balgwand 5 durch die doppelt liegende Verstärkungslage 19 besonders steif. Die in einem Bereich 22 des Wulstes 3 in unmontiertem Zustand nahezu senkrecht nach oben weisende Balgwand 5 wird durch diese Steifigkeit beim Abrollen der Balgwand 5 über die Abrollkante 12 des Abrollkolbens 9 in den Bogen 15 gezwungen. Dadurch kann eine größere Länge der Balgwand 5 noch innerhalb des Kolbendurchmessers 23 untergebracht werden. Das Ende 21 der Schlaufe 20 erreicht die Abrollkante 12 nicht.

Die in unmontiertem Zustand des Luftfederbalges 1 sichtbare Sollknickstelle 14 (Fig. 1) ist durch die bei der Abrollung auftretenden Kräfte glattgezogen und in dieser Darstellung nicht mehr sichtbar. Sie ist in der Balgwand 5 so positioniert, dass sie kurz vor oder direkt im Bereich der Abrollkante 12 des Abrollkolbens 9 zu liegen kommt und damit das Abrollen des Luftfederbalges zusätzlich erleichtert, wobei dieser Effekt besonders zum Tragen kommt, wenn der Luftfederbalg 1 aus dem vollständig ausgefederten, d.h. vollständig nach oben gerichteten Zustand und ohne Innendruck der Luftfeder wieder auf dem Abrollkolben 9 abrollen soll.

### Bezugszeichenliste

### (Teil der Beschreibung)

- 1: Luftfederbalg
- 2: untere Öffnung des Luftfederbalges 1
- 3: Wulst
- 4: konische Dichtfläche des Wulstes 3
- 5: Balgwand
- 6: Konussitz
- 7: untere Fläche des Wulstes 3
- 8: Kolbendeckel
- 9: Abrollkolben
- 12: Abrollkante
- 13: Abrollmantel
- 14: Sollknickstelle
- 15: Bogen der Balgwand 5
- 18: Verstärkungskern
- 19: Verstärkungslage
- 20: Schlaufe
- 21: Ende der Schlaufe 20
- 22: Bereich des Übergangs vom Wulst 3 in die Balgwand 5
- 23: Kolbendurchmesser

## Patentansprüche

1. Luftfeder
mit einem Abrollkoben (9) mit einem Kolbendeckel (8), einer Abrollkante (12), einem Abrollmantel (13) und einem Konussitz (6) im Kolbendeckel (8),
mit einem Luftfederbalg (1) mit einer Balgwand (5) aus elastomerem Werkstoff mit mindestens einer Verstärkungslage (19) und einem an einer unteren, dem Abrollkoben (9) zugewandten Öffnung (2) angeordneten Wulst (3), der einen ringförmigen Verstärkungskern (1)8 aufweist, wobei die mindestens eine Verstärkungslage (19) im Bereich des unteren Endes des Luftfederbalges (1) um den Verstärkungskern (18) herumgeführt ist,
wobei der Balg (1) der Luftfeder eine Balgwand (5) aufweist, die an einer im auf dem Kolben montierten Zustand des Balges (1) oberen, vom Deckel (8) des Abrollkolben (9) abgewandten Seite des Wulstes (3) vom Kolbendeckel (8) wegweisend vom Wulst (3) abragt und bei vollständiger Ausfederung der Luftfeder eine Tangente der Balgwand (5) an der Stelle, an der die Balgwand (5) vom Wulst (3) abragt, mit dem Deckel (8) des Abrollkolbens (9) einen Winkel im Bereich von 45° - 90° bildet,
**dadurch gekennzeichnet, dass**
die in die Balgwand (5) zurückgeführte Schlaufe (20) der mindestens einen Verstärkungslage (19) in eingefedertem Zustand des Balges (1) innerhalb des Kolbendurchmessers (23) vor der Abrollkante (12) endet.

2. Luftfeder nach Anspruch 1, **dadurch gekennzeichnet, dass** der Balg (1) der Luftfeder im Bereich des Endes (21) der Schlaufe (20) eine Sollknickstelle (14) derart aufweist, dass der vom unteren Ende des Luftfederbalges 1 aus im unmontierten, senkrecht ausgerichteten Zustand nach oben gesehen wachsende Durchmesser des Luftfederbalges 1 ab dieser Stelle (6) auf einer vorbestimmte Länge des Luftfederbalges (1) stärker zunimmt als zwischen dem unteren Ende des Luftfederbalges (1) und der Knickstelle (6),
wobei die Knickstelle (6) im Betriebszustand der Luftfeder im Bereich der Abrollkante (12)des Abrollkobens (8) zu liegen kommt.

3. Luftfederbalg für eine einen Abrollkoben (9) mit einem Kolbendeckel (8), einer Abrollkante (12), einem Abrollmantel (13) und einem Konussitz (6) im Kolbendeckel (8) aufweisende Luftfeder,
- mit einer Balgwand (5) aus elastomerem Werkstoff mit mindestens einer Verstärkungslage (19) und einem an einer bei senkrechter Ausrichtung des Luftfederbalges unteren Öffnung (2) angeordneten Wulst (3), der einen ringförmigen Verstärkungskern (18) aufweist, wobei die mindestens eine Verstärkungslage (19) im Bereich des unteren Endes des Luftfederbalges (1) um den Verstärkungskern (18) herumgeführt ist,
- wobei die Balgwand (5) an einer bei senkrechter Ausrichtung des Luftfederbalges oberen Seite des Wulstes (3) nach oben weisend vom Wulst (3) abragt und eine Tangente der Balgwand (5) an der Stelle, an der die Balgwand (5) vom Wulst (3) abragt, mit einer senkrecht zur Balgachse legenden Ebene einen Winkel im Bereich von 45° - 90° bildet,
**dadurch gekennzeichnet, dass**
die in die Balgwand (5) zurückgeführte Schlaufe (20) der mindestens einen Verstärkungslage (19) im auf dem Kolben (9) montierten Zustand des Balges (1) in eingefedertem Zustand des Balges (1) innerhalb des Kolbendurchmessers (23) vor der Abrollkante (12) endet.

4. Luftfederbalg nach Anspruch 3, **dadurch gekennzeichnet**, der Luftfederbalg (1) im Bereich des Endes (21) der Schlaufe (20) eine Sollknickstelle (14) derart aufweist, dass der vom unteren Ende des Luftfederbalges (1) aus im unmontierten, senkrecht ausgerichteten Zustand nach oben gesehen wachsende Durchmesser des Luftfederbalges (1) ab dieser Stelle (6) auf einer vorbestimmte Länge des Luftfederbalges (1) stärker zunimmt als zwischen dem unteren Ende des Luftfederbalges (1) und der Knickstelle (6), wobei die Knickstelle (6) im auf dem Kolben (9) montierten Zustand des Balges (1) im Betriebszustand der Luftfeder im Bereich der Abrollkante (12) des Abrollkobens (9) zu liegen kommt.

## Claims

1. Air spring
- having a rolling piston (9) with a piston cover (8), a rolling edge (12), a rolling casing (13) and a conical seat (6) in the piston cover (8),
- having an air spring bellows (1) with a bellows wall (5) composed of elastomeric material with at least one reinforcement layer (19) and a bead (3) arranged at a lower opening (2) which faces towards the rolling piston (9), which bead (3) has an annular reinforcement core (18), with the at least one reinforcement layer (19) being guided around the reinforcement core (18) in the region of the lower end of the air spring bellows (1),
- wherein the bellows (1) of the air spring has a bellows wall (5) which, on a side of the bead (3) which is situated at the top when the bellows (1) is mounted on the piston and which faces away from the cover (8) of the rolling piston (9), projects from the bead (3) in a direction pointing away from the piston cover (8), and when the air spring is fully extended, a tangent of the bellows wall (5) at the point at which the bellows wall (5) projects from the bead (3) forms an angle in the range of 45° - 90° with the cover (8) of the rolling piston (9),
**characterized in that**,
when the bellows (1) is in the compressed state, the loop (20), which is guided back into the bellows wall (5), of the at least one reinforcement layer (19) ends within the piston diameter (23) before the rolling edge (12).

2. Air spring according to Claim 1, **characterized in that** the bellows (1) of the air spring has, in the region of the end (21) of the loop (20), a predetermined bending point (14) such that the diameter of the air spring bellows (1), which increases in the upward direction from the lower end of the air spring bellows (1) in the unmounted, vertically aligned state, increases in a more pronounced fashion from said point (6) over a predetermined length of the air spring bellows (1) than between the lower end of the air spring bellows (1) and the bend point (6), with the bend point (6) coming to rest, in the operating state of the air spring, in the region of the rolling edge (12) of the rolling piston (8).

3. Air spring bellows for an air spring which has a rolling piston (9) with a piston cover (8), a rolling edge (12), a rolling casing (13) and a conical seat (6) in the piston cover (8),
- having a bellows wall (5) which is composed of elastomeric material and which has at least one reinforcement layer (19) and a bead (3) which is arranged at an opening (2) situated at the bottom when the air spring bellows is aligned vertically and which has an annular reinforcement core (18), with the at least one reinforcement layer (19) being guided around the reinforcement core (18) in the region of the lower end of the air spring bellows (1),
- with the bellows wall (5) projecting upwards from the bead (3) on a side of the bead (3) which is situated at the top when the air spring bellows is aligned vertically, and with a tangent of the bellows wall (5) at the point at which the bellows wall (5) projects from the bead (3) forming an angle in the range of 45° - 90° with a plane perpendicular to the bellows axis,
**characterized in that**,
when the bellows (1) is mounted on the piston (9) and the bellows (1) is in the compressed state, the loop (20), which is guided back into the bellows wall (5), of the at least one reinforcement layer (19) ends within the piston diameter (23) before the rolling edge (12).

4. Air spring bellows according to Claim 3, **characterized in that** the air spring bellows (1) has, in the region of the end (21) of the loop (20), a predetermined bending point (14) such that the diameter of the air spring bellows (1), which increases in the upward direction from the lower end of the air spring bellows (1) in the unmounted, vertically aligned state, increases in a more pronounced fashion from said point (6) over a predetermined length of the air spring bellows (1) than between the lower end of the air spring bellows (1) and the bend point (6), with the bend point (6) coming to rest, when the bellows (1) is mounted on the piston (9) and in the operating state of the air spring, in the region of the rolling edge (12) of the rolling piston (9).

## Revendications

1. Amortisseur pneumatique présentant :
un piston de déroulement (9) doté d'un couvercle (8) de piston, d'un bord de déroulement (12), d'une enveloppe de déroulement (13) et d'un siège conique (6) dans le couvercle (8) du piston,
un soufflet (1) d'amortisseur pneumatique qui présente une paroi (5) de soufflet en un matériau élastomère doté d'au moins une couche de renfort (19) et
un bourrelet (3) qui est disposé sur une ouverture inférieure (2) tournée vers le piston de déroulement (9) et qui présente une âme annulaire de renfort (18),
la ou les couches de renfort (19) étant rabattues autour de l'âme de renfort (18) dans la zone occupée par l'extrémité inférieure du soufflet (1) de l'amortisseur pneumatique,
le soufflet (1) de l'amortisseur pneumatique présentant sur un côté supérieur du bourrelet (3) non tourné vers le couvercle (8) du piston de déroulement (9) une paroi de soufflet (5) qui déborde du soufflet (3) en s'éloignant du couvercle (8) du piston lorsque le soufflet (1) est monté sur le piston,
lorsque l'amortisseur pneumatique est complètement déployé, une tangente à la paroi (5) du soufflet à l'emplacement sur lequel la paroi (5) du soufflet déborde du bourrelet (3) formant avec le couvercle (8) du piston de déroulement (9) un angle compris dans la plage de 45° à 90°,
**caractérisé en ce que**
la boucle (20), ramenée dans la paroi (5) du soufflet, de la ou des couches de renfort (19) se termine à l'intérieur du diamètre (23) du piston en avant du bord de déroulement (12) lorsque le soufflet (1) est à l'état rétracté.

2. Amortisseur pneumatique selon la revendication 1, **caractérisé en ce que** dans la zone de l'extrémité (21) de la boucle (20), le soufflet (1) de l'amortisseur pneumatique présente un emplacement de flambage de consigne (14) de telle sorte que le diamètre du soufflet (1) de l'amortisseur pneumatique qui augmente vu du haut à partir de l'extrémité intérieure du soufflet (1) de l'amortisseur pneumatique lorsque l'amortisseur n'est pas monté et est orienté verticalement augmente davantage à partir de cet endroit (6) sur une longueur prédéterminée du soufflet (1) de l'amortisseur pneumatique qu'entre l'extrémité inférieure du soufflet (1) de l'amortisseur pneumatique et l'emplacement de flambage (6), tandis que lorsque l'amortisseur pneumatique est en conditions de fonctionnement, l'emplacement de flambage (6) vient se placer dans la zone du bord de déroulement (12) du piston de déroulement (8).

3. Soufflet d'amortisseur pneumatique pour un amortisseur pneumatique qui présente :
un piston de déroulement (9) doté d'un couvercle du piston (8), d'un bord de déroulement (12), d'une enveloppe de déroulement (13) et d'un siège conique (6) dans le couvercle (8) du piston,
un soufflet (1) d'amortisseur pneumatique qui présente une paroi (5) de soufflet en un matériau élastomère doté d'au moins une couche de renfort (19) et d'un bourrelet (3) qui est disposé sur l'ouverture inférieure (2) et qui présente une âme annulaire de renfort (18), la ou les couches de renfort (19) étant rabattues autour de l'âme de renfort (18) dans la zone occupée par l'extrémité inférieure du soufflet (1) de l'amortisseur pneumatique,
la paroi (5) du soufflet débordant du bourrelet (3) sur le côté du bourrelet (3) situé dans le haut lorsque le soufflet de l'amortisseur pneumatique est orienté à la verticale et
une tangente à la paroi (5) du soufflet à l'emplacement sur lequel la paroi (5) du soufflet déborde du bourrelet (3) formant avec un plan perpendiculaire à l'axe du soufflet un angle compris dans la plage de 45° à 90°,
**caractérisé en ce que**
lorsque le soufflet (1) est monté sur le piston (9), la boucle (20), ramenée dans la paroi (5) du soufflet, de la ou des couches de renfort (19) se termine à l'intérieur du diamètre (23) du piston en avant du bord de déroulement (12) lorsque le soufflet (1) est à l'état rétracté.

4. Soufflet pour amortisseur pneumatique selon la revendication 3, **caractérisé en ce que** dans la zone de l'extrémité (21) de la boucle (20), le soufflet (1) de l'amortisseur pneumatique présente un emplacement de flambage de consigne (14) de telle sorte que le diamètre du soufflet (1) de l'amortisseur pneumatique qui augmente vers le haut lorsque le soufflet (1) de l'amortisseur n'est pas monté et est orienté verticalement augmente davantage à partir de cet endroit (6) sur une longueur prédéterminée du soufflet (1) de l'amortisseur pneumatique qu'entre l'extrémité inférieure du soufflet (1) de l'amortisseur pneumatique et l'emplacement de flambage (6), tandis que lorsque le soufflet (1) est monté sur le piston (9) et que l'amortisseur pneumatique est en conditions de fonctionnement, l'emplacement de flambage (6) vient se placer dans la zone du bord de déroulement (12) du piston de déroulement (9).
